# EUROPÄISCHE PATENTSCHRIFT

(11) **EP 3 132 152 B1**
(45) Veröffentlichungstag und Bekanntmachung des Hinweises auf die Patenterteilung: **22.08.2018**
(21) Anmeldenummer: 15713637.5
(22) Anmeldetag: 04.03.2015
(51) Int. Cl.: F16C 41/00, H02K 1/14, H02K 7/08, H02K 7/18

(54) **WÄLZLAGER MIT INTEGRIERTEM KLAUENPOLGENERATOR MIT SEKTORFÖRMIGEM STÄNDER UND KLAUENPOLGENERATOR MIT SEKTORFÖRMIGEM STÄNDER**
ROLLING BEARING WITH INTEGRATED SECTIONAL CLAW POLE GENERATOR AND SECTIONAL CLAW POLE GENERATOR
ROULEMENT AVEC GÉNÉRATRICE À PÔLES À GRIFFES SECTIONELLE INTÉGRÉE ET GÉNÉRATRICE À PÔLES À GRIFFES SECTIONELLE

(30) Priorität: 15.04.2014 DE 102014207209
(43) Veröffentlichungstag der Anmeldung: 22.02.2017
(73) Patentinhaber: Schaeffler Technologies AG & Co. KG, 91074 Herzogenaurach (DE)
(72) Erfinder: RINK, Thomas, 97705 Waldfenster (DE)
(86) Internationale Anmeldenummer: PCT/DE2015/200119
(87) Internationale Veröffentlichungsnummer: WO 2015/158338

(56) Entgegenhaltungen:
- EP-A1- 0 594 550
- EP-A2- 1 906 509
- WO-A2-2013/160035
- DE-A1-102010 018 472
- DE-A1-102010 021 159
- DE-A1-102010 021 160
- DE-A1-102011 075 547
- JP-A- 2004 132 447
- US-A1- 2008 093 950

## Beschreibung

### Gebiet der Erfindung

Die vorliegende Erfindung betrifft ein Wälzlager mit integriertem Klauenpolgenerator. Die Erfindung betrifft auch einen Klauenpolgenerator zum Einbau in ein Wälzlager.

### Hintergrund der Erfindung

Wälzlager umfassen als gegeneinander rotierbare Lagerringe einen Innenring und einen Außenring. In verschiedenen Lageranwendungen sind beispielsweise die Erfassung von Drehzahl und Drehrichtung oder andere Überwachungsaufgaben des rotierenden Lagerteils erforderlich. Für diese und andere Aufgaben werden elektronische Komponenten, wie Sensoren, Aktoren, Prozessoren und Datenspeicher, benötigt.

Aus dem Stand der Technik ist es bekannt, Generatoren in Wälzlager einzubauen, welche den dort vorhanden elektronischen Komponenten aufwandsarm die erforderliche Energie zur Verfügung stellen. Es existieren Lösungen, welche sogenannte Klauenpolgeneratoren nutzen. Bekannte Klauenpolgeneratoren umfassen einen ersten Klauenring mit einer in Umfangsrichtung des Wälzlagers verlaufenden Abfolge von ersten Klauen, einen zweiten Klauenring mit einer in Umfangsrichtung des Wälzlagers verlaufenden Abfolge von zweiten Klauen, sowie eine von den beiden Klauenringen umgebene Induktionsspule, die die Drehachse des Wälzlagers umläuft. Die Klauenpolringe sind in Umfangsrichtung versetzt zueinander angeordnet. Der Klauenpolgenerator umfasst weiterhin eine in Umfangsrichtung verlaufende Abfolge von magnetischen Polen. Steht eine erste Klaue des ersten Klauenrings einem ersten Pol, beispielsweise einem Nordpol, gegenüber, wird ein magnetischer Kreis über eine in Umfangsrichtung benachbarte zweite Klaue des zweiten Klauenrings zu einem in Umfangsrichtung benachbarten zweiten, komplementären magnetischen Pol, in diesem Fall einem Südpol, ausgebildet, der die Induktionsspule umgibt. Dreht sich der Lagerring mit den beiden Klauenringen weiter, steht die zweite Klaue einem Nordpol gegenüber und die erste Klaue einem Südpol, so dass sich die Richtung des die Induktionsspule umgebenden magnetischen Kreises umkehrt und in der Induktionsspule eine elektrische Spannung induziert wird.

Die DE 10 2011 075 548 A1 beschreibt ein Lager mit einem ersten und einem zweiten Lagerring und einer als Klauenpolgenerator ausgebildeten Energieerzeugungseinheit. Der Klauenpolgenerator umfasst einen ersten Klauenring mit einer Abfolge von ersten Klauen und einen in Umfangsrichtung der Drehachse versetzten zweiten Klauenring mit einer Abfolge von zweiten Klauen. Die beiden Klauenringe umgeben eine die Drehachse umlaufenden Induktionsspule. Klauenringe und Induktionsspule sind mit einem ersten Trägerring auf einer Stirnfläche des ersten Lagerings befestigt. Eine die Drehachse umlaufende Abfolge von magnetischen Polen ist mittels eines zweiten Trägerrings auf der Stirnfläche des zweiten Lagerrings befestigt. Die magnetischen Pole sind über einen Rückschlussring aus einem magnetisch leitenden Material untereinander magnetisch leitend verbunden. Die beiden Klauenringe sind mit Hilfe eines Flussleitrings magnetisch leitend verbunden.

In der DE 10 2009 031 609 A1 ist ein Wälzlager mit einem zwischen erstem und zweitem Lagerring angeordnetem Klauenpolgenerator beschrieben. Der Klauenpolgenerator umfasst eine entlang des Umfangs des zweiten Lagerrings umlaufende Abfolge von magnetischen Polpaaren, einen an dem ersten Lagerring befestigten Klauenring mit einer entlang eines Umfangs des ersten Lagerrings umlaufenden Abfolge von Klauen, sowie eine magnetische Induktionsspule. Eine erste Klaue des Klauenrings ist in magnetisch leitender Verbindung mit einem magnetisch leitenden Abschnitt des Korpus des ersten Lagerrings angeordnet. Die magnetischen Pole der Polpaare sind in magnetisch leitender Verbindung mit einem magnetisch leitenden Abschnitt des Korpus des zweiten Lagerrings angeordnet. Der magnetische Kreis wird über die beiden magnetischen Abschnitte und die Wälzkörper geschlossen.

Die DE 10 2010 022 369 A1 zeigt ein Wälzlager mit einem zwischen erstem und zweitem Lagerring angeordneten Klauenpolgenerator. Der Klauenpolgenerator umfasst eine entlang des ersten Lagerrings umlaufende Abfolge magnetischer Pole, eine entlang des zweiten Lagerrings umlaufende Abfolge von magnetisch leitenden Klauen und eine Induktionsspule, welche an einem zur Aufnahme der Wälzkörper dienenden Käfig angeordnet ist.

Die DE 10 2011 075 547 A1 beinhaltet ein Wälzlager mit einem zwischen erstem und zweitem Lagerring umlaufend angeordneten Klauenpolgenerator mit den Merkmalen des Oberbegriffs des Anspruchs 8, dessen magnetische Pole an einem zur Aufnahme der Wälzkörper dienenden Käfig angeordnet sind.

Die DE 10 2011 082 804 A1 befasst sich mit einem Wälzlager mit integriertem Klauenpolgenerator umfassend einen ersten Klauenring mit einer Abfolge von ersten Klauen und einen in Umlaufrichtung der Drehachse des Lagers versetzten zweiten Klauenring mit einer Abfolge von zweiten Klauen. Die Klauenringe umgeben eine die Drehachse umlaufende Induktionsspule. Klauenringe und Induktionsspule sind auf einer Stirnfläche eines ersten Lagerrings befestigt. Eine Abfolge von magnetischen Polen ist an einem zweiten Lagerring befestigt und mittels eines Rückschlussrings aus einem magnetisch leitenden Material untereinander magnetisch leitend verbunden. Die beiden Klauenringe sind durch einen magnetisch leitenden Abschnitt eines axialen Sicherungselementes, insbesondere durch eine Wellenmutter oder durch eine Nutmutter, magnetisch leitend verbunden.

Die vorbekannten Lösungen verwenden Klauenpolgeneratoren, welche über den kompletten Umfang des Wälzlagers angeordnet sind. Hierdurch sind sie vom Durchmesser des Wälzlagers abhängig und nicht universell einsetzbar.

Die DE 10 2010 021 159 A1 zeigt ein Wälzlager mit einem Schenkelpolgenerator mit einem Primärteil und einem Sekundärteil, die jeweils mit einem der Lagerringe drehfest verbunden sind. Das Sekundärteil ist durch Permanentmagnete gebildet, welche mit abwechselnder Polarisierung in Umfangsrichtung des Lagerrings angeordnet sind. Der Generator ist modular aufgebaut, so dass er in verschiedene Lagertypen integrierbar ist. Hierzu sind die Permanentmagnete in einem Sekundärträger eingebettet. Das Primärteil umfasst Schenkelpole mit jeweils einer Einzelpolwicklung, die in einem Primärträger eingebettet sind. Primär- und Sekundärträger sind so ausgeführt, dass sie unabhängig vom späteren Einbau-Durchmesser zum Generator komplettierbar sind. Primär- und Sekundärteil müssen sich nicht über den gesamten Umfang eines Wälzlagers erstrecken, sondern können sich auch abschnittsweise zwischen den Lagerringen erstrecken. In diesem Fall ist ein Ausgleichsgewicht an dem diametral gegenüberliegenden Abschnitt des Generators vorzusehen. Alternativ kann gegenüberliegend auch ein zweiter Generator vorgesehen sein.

### Zusammenfassung der Erfindung

Die Aufgabe der vorliegenden Erfindung besteht darin, ein Wälzlager mit einem integrierten Klauenpolgenerator zur Verfügung zu stellen, wobei der Klauenpolgenerator für verschiedene Lagerdurchmesser verwendbar und kostengünstig herstellbar sein soll.

Zur Lösung der erfindungsgemäßen Aufgabe dient ein Wälzlager gemäß dem beigefügten Anspruch 1 sowie ein Klauenpolgenerator gemäß Anspruch 8. Das erfindungsgemäße Wälzlager umfasst einen ersten und einen zweiten Lagerring sowie einen zwischen den beiden Lagerringen angeordneten Klauenpolgenerator. Der Klauenpolgenerator besteht aus einer entlang des Umfangs des ersten Lagerrings umlaufenden Abfolge von magnetischen Polen, einer entlang des Umfangs des zweiten Lagerrings angeordneten Abfolge von magnetisch leitenden Klauen sowie einer Spule. Die Klauen bilden mit den Polen die Spule umgebende magnetische Kreise aus. Erfindungswesentlich ist, dass die magnetisch leitenden Klauen entlang des Umfangs des zweiten Lagerrings nur abschnittsweise angeordnet sind. Die Spule ist im Bereich der magnetisch leitenden Klauen angeordnet.

Ein wesentlicher Vorteil der erfindungsgemäßen Lösung besteht darin, dass der Klauenpolgenerator aufgrund seines Aufbaus für verschiedene Wälzlagergrö-ßen und -bauformen einsetzbar ist. Eine Leistungsdimensionierung des Klauenpolgenerators kann bei unterschiedlichen Lagerdurchmessern einfach erfolgen. Dies wird insbesondere durch die abschnittweise Anordnung der magnetisehen Klauen ermöglicht. Außerdem können die magnetischen Pole in unterschiedlichen Geometrien vorgehalten werden. Durch seinen einfachen Aufbau ist der Klauenpolgenerator für eine Massenproduktion geeignet und somit preiswert fertigbar. Der Klauenpolgenerator kann nachträglich in ein Wälzlager eingebaut werden, um eine Standardlagerung mit einer Energieversorgung auszurüsten.

Erfindungsgemäß umfasst der Klauenpolgenerator zwei axial gegenüberliegende magnetisch leitende Klauenbleche mit sich radial erstreckenden Seitenflächen und in axialer Richtung abgewinkelten Klauen. Die Klauen der Klauenbleche sind hierbei abwechselnd ineinander verzahnt angeordnet. Die Spule ist von den Klauenblechen umgeben. Die Länge der Klauenbleche bestimmt die Anzahl der Polpaare und somit die elektrische Leistungsklasse. Durch geometrischen Versatz (resultierend in einer elektrischen Phasenverschiebung) der beiden Klauenbleche in Umfangsrichtung zueinander kann eine geeignete Spannungsform zur Wandlung der von der Spule induzierten Wechselspannung in eine Gleichspannung zur Verfügung gestellt werden. Hieraus ergibt sich ein 2-Phasen System. Der geometrische Versatz kann durch die magnetischen Pole (zwei unabhängige Magnetkreise) oder durch um einen Polteilungsfaktor versetzte Klauenbleche hervorgerufen werden.

Erfindungsgemäß weisen die Seitenflächen der Klauenbleche radiale Schlitze auf. Aufgrund der Schlitze können die Klauenbleche aufwandsarm durch einen Biegevorgang an den jeweiligen Lagerumfang angepasst werden.

Die beiden Klauenbleche und die Spule können zu einer gemeinsamen Baueinheit zusammengefasst werden, welche an dem zweiten Lagerring zu befestigen ist. Zur Erhöhung des mechanischen und chemischen Schutzes der gesamten Baueinheit kann diese vergossen werden, wobei zur Befestigung der Baueinheit dienende Befestigungselemente, zum Beispiel Hülsen als Schraubendurchgangsöffnung, mit eingegossen werden können. Durch die Zusammenfassung von Klauenblechen und Spulen zu einer kompakten Baueinheit verringert sich nicht zuletzt auch der Montageaufwand.

Eine vorteilhafte Ausführungsform verwendet einen ersten Trägerring zum Tragen der magnetischen Pole und/oder einen zweiten Trägerring zur Befestigung der Klauenbleche und der Spule. Die Pole können als einzelne Permanentmagnete ausgeführt sein, welche in die Umfangsfläche des ersten Trägerrings eingebettet sind. Alternativ kann der erste Trägerring an seiner Umfangsfläche in Umfangsrichtung alternierend magnetisierte Abschnitte aufweisen. Der erste Trägerring ist vorzugweise mittels eines magnetisch leitenden Klebers am ersten Lagerring befestigt. Der zweite Trägerring kann beispielsweise durch eine Presspassung am zweiten Lagerring befestigt werden. Die Verwendung der Trägerringe ermöglicht eine aufwandsarme Montage bzw. Demontage des Klauenpolgenerators.

Der magnetische Rückschluss erfolgt vorzugsweise über eine Wälzlagerkomponente, beispielsweise über einen der beiden Lagerringe.

Die Spule ist vorzugsweise als Ringspule ausgeführt. Des Weiteren ist die Spule nach einer bevorzugten Ausführungsform fertig gewickelt und die einzelnen Windungen sind miteinander verklebt, wodurch sich eine freitragende Spule, eine sogenannte Backlackspule, ergibt. Die Spule wird vor dem Biegevorgang der Klauenpolbleche eingelegt und passt sich durch den nachfolgenden Biegevorgang dem jeweils erforderlichen Durchmesser an.

Zwischen den beiden Klauenblechen befindet sich zweckmäßigerweise ein flexibler Träger zur Aufnahme leistungselektronischer Bauelemente, wie beispielsweise eines Gleichrichters. Auf diese Weise können die leistungselektronischen Bauelemente bauraumneutral in den zur Aufnahme der Spule dienenden Bauraum integriert werden.

Zur Realisierung einer transformatorischen Energieübertragung kann das Wälzlager einen zweiten, identischen Klauenpolgenerator aufweisen. Die beiden Klauenpolgeneratoren sind hierbei axial einander gegenüberliegend im Wälzlager angeordnet. Die Initiierung der elektromagnetischen Energieübertragung wird bei Überdeckung, auch bei teilweiser Überdeckung, welche jedoch mindestens ein Polpaar betragen muss, von Primär- und Sekundärklauenpolgenerator ausgelöst. Die Überdeckung von Primär- und Sekundärklauenpolgenerator kann über eine induzierte Spannung im Primärkreis durch das erste Sekundärpolpaarelement identifiziert werden (Sekundärklauenpolgenerator mit Restmagnetismus oder magnetisch vorgespannt).

Der magnetische Kreis kann als aktives Target zur Drehzahl- und Drehrichtungserfassung sowie zur Winkelpositionsbestimmung verwendet werden. Als Sensorelement kann beispielsweise ein Hallsensor, ein magneto-resistiver Sensor (XMR) oder ein Differentialtransformator dienen. Die Temperatur des Klauenpolgenerators kann über den Wicklungswiderstand der Spule erfasst werden. Aus der Temperatur des Klauenpolgenerators kann auf die Wälzlagertemperatur geschlossen werden.

Ein erfindungsgemäßer Klauenpolgenerator umfasst eine Abfolge von magnetischen Polen, welche umlaufend auf einem ersten Trägerring angeordnet sind, zwei axial gegenüberliegende Klauenbleche mit sich radial erstreckenden Seitenflächen und in axialer Richtung abgewinkelten Klauen, sowie eine von den Klauenblechen umgebene Spule. Die Klauenbleche sind erfindungsgemäß als Kreisbogen ausgebildet.

Weitere vorteilhafte Ausführungsformen der vorliegenden Erfindung finden sich in den abhängigen Ansprüchen wieder.

### Kurze Beschreibung der Zeichnungen

Eine bevorzugte Ausführungsform der Erfindung wird nachfolgend anhand der beigefügten Figuren näher erläutert. Es zeigen:
- Fig. 1: eine perspektivische Darstellung eines erfindungsgemäßen Wälzlagers;
- Fig. 2: eine perspektivische Darstellung eines erfindungsgemäßen Klauenpolgenerators.

### Detaillierte Beschreibung der Zeichnungen

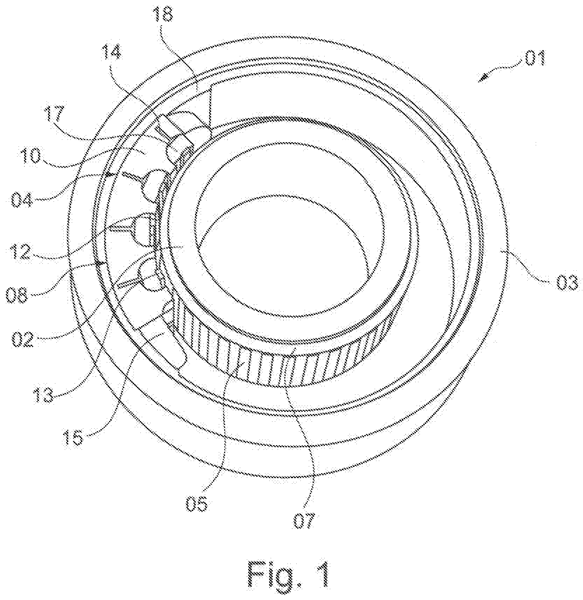

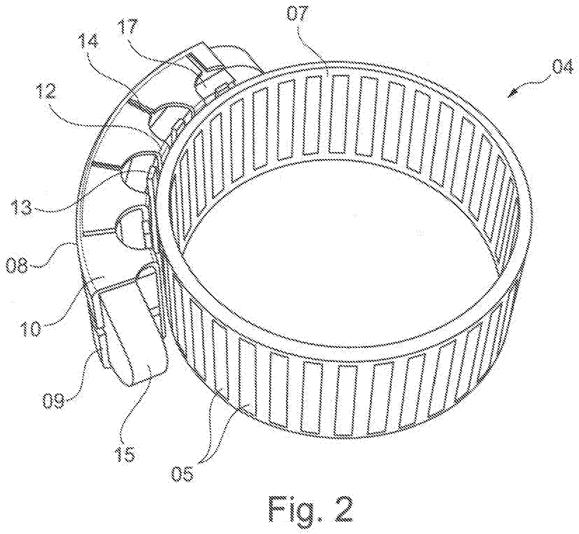

Fig. 1 zeigt eine perspektivische Darstellung eines erfindungsgemäßen Wälzlagers 01. Das Wälzlager 01 besteht aus einem Innenring 02, einem Außenring 03 sowie dazwischen angeordneten Wälzkörpern (nicht dargestellt). Zwischen Innenring 02 und Außenring 03 ist auf einer Seite der Wälzkörper ein Klauenpolgenerator 04 angeordnet, welcher separat in Fig. 2 dargestellt ist. Der Klauenpolgenerator 04 umfasst eine den Innenring 02 umlaufende Abfolge magnetischer Pole 05. Die magnetischen Pole 05 sind auf einem ersten Trägerring 07 angeordnet. Sie können beispielsweise als in die Oberfläche des ersten Trägerrings 07 eingebettete Permanentmagnete realisiert sein. Bei alternativen Ausführungen kann der erste Trägerring 07 an seiner Umfangsfläche in Umfangsrichtung alternierend magnetisierte Abschnitte aufweisen. Der erste Trägerring 07 ist vorzugsweise über eine Klebeverbindung am Innenring 02 befestigt.

Der Klauenpolgenerator 04 umfasst weiterhin ein erstes und ein zweites bogenförmiges magnetisch leitendes Klauenblech 08, 09 (vgl. Fig. 2), welche axial einander gegenüberliegend angeordnet sind. Die Klauenbleche 08, 09 weisen sich radial erstreckende Seitenflächen 10 und in axialer Richtung abgewinkelte Klauen 12, 13 auf. Die Klauen 12 des ersten Klauenblechs 08 und die Klauen 13 des zweiten Klauenblechs 09 sind abwechselnd ineinander verzahnt angeordnet. In die Seitenflächen 10 der Klauenbleche 08, 09 sind radiale Schlitze 14 eingebracht. Durch die radialen Schlitze 14 können die Klauenbleche 08, 09 aufwandsarm gebogen werden, wodurch sie an unterschiedliche Durchmesser angepasst werden können.

Zwischen den Klauenblechen 08, 09 befindet sich eine Spule 15, welche vorzugsweise als freitragende Spule ausgeführt ist. Die Spule 15 wird vor dem Biegevorgang der Klauenbleche 08, 09 eingelegt und passt sich durch den anschließenden Biegevorgang dem erforderlichen Durchmesser an. Im Bauraum zwischen den Klauenblechen 08, 09 befindet sich außerdem ein flexibler Träger 17, welcher zur Aufnahme elektronischer Bauelemente (nicht gezeigt) dient.

Klauenbleche 08, 09 und Spule 15 sind vorzugsweise zu einer Baueinheit zusammengefasst. Diese Baueinheit kann vergossen werden und am Außenring 03 des Wälzlagers 01 befestigt werden. Bei der in Fig. 1 gezeigten Ausführungsform sind Klauenbleche 08, 09 und Spule 15 auf einem zweiten Trägerring 18 befestigt, welcher wiederum am Außenring 03 befestigt ist. Klauenbleche 08, 09 und Spule 15 könnten alternativ auch direkt am Außenring 03 befestigt werden. Die Verwendung eines separaten Trägerrings 18 erleichtert jedoch die Montage bzw. Demontage von Klauenblechen 08, 09 und Spule 15.

Der magnetische Fluss geht von einem ersten Pol, beispielsweise einem Nordpol, in die dem Pol gegenüberliegende Klaue 12, 13 eines der beiden Klauenbleche 08, 09, von dort umschließt er die Spule 15 und tritt an der benachbarten Klaue 12, 13 des anderen der beiden Klauenbleche 08, 09 wieder zum benachbarten Südpol aus. Wenn sich der die beiden Klauenbleche 12, 13 tragende Außenring 03 weiter dreht, kehrt sich die Richtung des die Spule 15 umgebenden magnetischen Flusses um, so dass in der Spule 15 eine elektrische Spannung induziert wird.

Der Klauenpolgenerator kann natürlich auch in umgekehrter Anordnung in ein Wälzlager 01 integriert werden. In diesem Fall würden die magnetischen Pole 05 auf dem Außenring 03 und die Klauenbleche 08, 09 am Innenring 02 angeordnet sein.

Der magnetische Rückschluss kann durch einen der beiden Lagerringe 02, 03 erfolgen.

### Bezugszeichenliste

- 01: Wälzlager
- 02: Innenring
- 03: Außenring
- 04: Klauenpolgenerator
- 05: magnetische Pole

- 07: erster Trägerring
- 08: erstes Klauenblech
- 09: zweites Klauenblech
- 10: Seitenflächen der Klauenbleche

- 12: erste Klauen
- 13: zweite Klauen
- 14: Schlitze
- 15: Spule

- 17: flexibler Träger
- 18: zweiter Trägerring

## Patentansprüche

1. Wälzlager (01) mit einem ersten Lagerring (02), einem zweiten Lagerring (03) und einem zwischen den beiden Lagerringen (02, 03) angeordneten Klauenpolgenerator (04) umfassend eine entlang des ersten Lagerrings (02) umlaufende Abfolge von magnetischen Polen (05), eine entlang des Umfangs des zweiten Lagerrings (03) angeordnete Abfolge von magnetisch leitenden Klauen (12, 13) und eine Spule (15), wobei die Klauen (12, 13) mit den Polen (05) die Spule (15) umgebende magnetische Kreise ausbilden, wobei die magnetisch leitenden Klauen (12, 13) entlang des Umfangs des zweiten Lagerrings (03) nur abschnittweise angeordnet sind, wobei die Spule (15) im Bereich der magnetisch leitenden Klauen (12, 13) angeordnet ist, wobei der Klauenpolgenerator (04) zwei axial gegenüberliegende magnetisch leitende Klauenbleche (08, 09) mit sich radial erstreckenden Seitenflächen (10) und in axialer Richtung abgewinkelten Klauen (12, 13) umfasst, wobei die Klauen (12, 13) der Klauenbleche (08, 09) abwechselnd ineinander verzahnt angeordnet sind, wobei die Spule (15) von den Klauenblechen (08, 09) umgeben ist, und wobei die Seitenflächen (10) der Klauenbleche (08, 09) radiale Schlitze (14) aufweisen.

2. Wälzlager (01) nach Anspruch 1, **dadurch gekennzeichnet, dass** die Klauenbleche (08, 09) um einen Polteilungsfaktor versetzt zueinander angeordnet sind.

3. Wälzlager (01) nach Anspruch 1 oder 2, **dadurch gekennzeichnet, dass** Klauenbleche (08, 09) und Spule (15) zu einer gemeinsamen Baueinheit zusammengefasst sind, welche am zweiten Lagerring (03) befestigt ist.

4. Wälzlager (01) nach einem der Ansprüche 1 bis 3, **dadurch gekennzeichnet, dass** es einen ersten Trägerring (07) zum Tragen der magnetischen Pole (05) und/oder einen zweiten Trägerring (18) zur Befestigung der Klauenbleche (08, 09) und der Spule (15) aufweist.

5. Wälzlager (01) nach einem der Ansprüche 1 bis 4, **dadurch gekennzeichnet, dass** sich zwischen den Klauenblechen (08, 09) ein flexibler Träger (17) zur Aufnahme elektronischer Bauelemente befindet.

6. Wälzlager (01) nach einem der Ansprüche 1 bis 5, **dadurch gekennzeichnet, dass** der magnetische Rückschluss über eine Wälzlagerkomponente (02, 03) erfolgt.

7. Wälzlager (01) nach einem der Ansprüche 1 bis 6, **dadurch gekennzeichnet, dass** es zwei Klauenpolgeneratoren (04) aufweist, welche axial gegenüberliegend im Wälzlager (01) angeordnet sind.

8. Klauenpolgenerator (04) zum Einbau in ein Wälzlager (01) umfassend eine Abfolge von magnetischen Polen (05), welche umlaufend auf einem ersten Trägerring (07) angeordnet sind, zwei axial gegenüberliegende Klauenbleche (08, 09) mit sich radial erstreckenden Seitenflächen (10) und in axialer Richtung abgewinkelten Klauen (12, 13), wobei die Klauen (12, 13) der Klauenbleche (08, 09) abwechselnd ineinander verzahnt angeordnet sind, und eine von den Klauenblechen (08, 09) umgebene Spule (15), wobei die Klauenbleche (08, 09) als Kreisbogenabschnitt ausgebildet sind, **dadurch gekennzeichnet, dass** die Seitenflächen (10) der Klauenbleche (08, 09) radiale Schlitze (14) aufweisen.

## Claims

1. Rolling bearing (01) having a first bearing ring (02), a second bearing ring (03) and a claw pole generator (04), which is arranged between the two bearing rings (02, 03), comprising a sequence of magnetic poles (05) which runs circumferentially along the first bearing ring (02), a sequence of magnetically permeable claws (12, 13) which is arranged along the circumference of the second bearing ring (03), and a coil (15), wherein the claws (12, 13) form, with the poles (05), magnetic circuits which surround the coil (15), wherein the magnetically permeable claws (12, 13) are arranged along the circumference of the second bearing ring (03) only in sections, wherein the coil (15) is arranged in the region of the magnetically permeable claws (12, 13), wherein the claw pole generator (04) comprises two magnetically permeable metal claw plates (08, 09), which are situated axially opposite one another and have radially extending side faces (10), and claws (12, 13) which are angled in the axial direction, wherein the claws (12, 13) of the metal claw plates (08, 09) are arranged such that they alternately mesh one in the other, wherein the coil (15) is surrounded by the metal claw plates (08, 09), and wherein the side faces (10) of the metal claw plates (08, 09) have radial slots (14).

2. Rolling bearing (01) according to Claim 1, **characterized in that** the metal claw plates (08, 09) are arranged such that they are offset in relation to one another by a pole pitch factor.

3. Rolling bearing (01) according to Claim 1 or 2, **characterized in that** the metal claw plates (08, 09) and the coil (15) are combined to form a common structural unit which is fastened to the second bearing ring (03).

4. Rolling bearing (01) according to one of Claims 1 to 3, **characterized in that** it has a first carrier ring (07) for carrying the magnetic poles (05) and/or a second carrier ring (18) for fastening the metal claw plates (08, 09) and the coil (15).

5. Rolling bearing (01) according to one of Claims 1 to 4, **characterized in that** a flexible carrier (17) for receiving electronic components is located between the metal claw plates (08, 09).

6. Rolling bearing (01) according to one of Claims 1 to 5, **characterized in that** magnetic return takes place by means of a rolling bearing component (02, 03).

7. Rolling bearing (01) according to one of Claims 1 to 6, **characterized in that** it has two claw pole generators (04) which are arranged axially opposite one another in the rolling bearing (01).

8. Claw pole generator (04) for installation into a rolling bearing (01) comprising a sequence of magnetic poles (05) which are arranged so as to run circumferentially on a first carrier ring (07), two axially opposite metal claw plates (08, 09) with radially extending side faces (10), and claws (12, 13) which are angled in the axial direction, wherein the claws (12, 13) of the metal claw plates (08, 09) are arranged such that they alternately mesh one in the other, and a coil (15) which is surrounded by the metal claw plates (08, 09), wherein the metal claw plates (08, 09) are in the form of a section of an arc of a circle, **characterized in that** the side faces (10) of the metal claw plates (08, 09) have radial slots (14).

## Revendications

1. Palier à roulement (01), comprenant une première bague de palier (02), une deuxième bague de palier (03) et une machine à pôles à griffes (04) disposée entre les deux bagues de palier (02, 03) et comportant une séquence circulaire de pôles magnétiques (05) le long de la première bague de palier (02), une séquence de griffes (12, 13) à conduction magnétique disposées le long du pourtour de la deuxième bague de palier (03) et une bobine (15), les griffes (12, 13) formant avec les pôles (05) qui entourent la bobine (15) des circuits magnétiques, les griffes (12, 13) à conduction magnétique n'étant disposées que dans certaines portions le long du pourtour de la deuxième bague de palier (03), la bobine (15) étant disposée dans la zone des griffes (12, 13) à conduction magnétique, la machine à pôles à griffes (04) comportant deux tôles à griffes (08, 09) à conduction magnétique opposées dans le sens axial munies de surfaces latérales (10) qui s'étendent dans le sens radial et de griffes (12, 13) coudées dans le sens axial, les griffes (12, 13) des tôles à griffes (08, 09) étant disposées imbriquées les unes dans les autres par leur denture, la bobine (15) étant entourée par les tôles à griffes (08, 09) et les surfaces latérales (10) des tôles à griffes (08, 09) possédant des rainures radiales (14).

2. Palier à roulement (01) selon la revendication 1, **caractérisé en ce que** les tôles à griffes (08, 09) sont disposées décalées les unes par rapport aux autres selon un facteur de distribution polaire.

3. Palier à roulement (01) selon la revendication 1 ou 2, **caractérisé en ce que** les tôles à griffes (08, 09) sont assemblées en une unité physique commune qui est fixée à la deuxième bague de palier (03) .

4. Palier à roulement (01) selon l'une des revendications 1 à 3, **caractérisé en ce qu'**il possède une première bague porteuse (07) destinée à supporter les pôles magnétiques (05) et/ou une deuxième bague porteuse (18) destinée à fixer les tôles à griffes (08, 09) et la bobine (15).

5. Palier à roulement (01) selon l'une des revendications 1 à 4, **caractérisé en ce qu'**un élément porteur (17) destiné à accueillir des composants électroniques se trouve entre les tôles à griffes (08, 09) .

6. Palier à roulement (01) selon l'une des revendications 1 à 5, **caractérisé en ce que** le retour magnétique s'effectue par le biais d'un composant du palier à roulement (02, 03).

7. Palier à roulement (01) selon l'une des revendications 1 à 6, **caractérisé en ce qu'**il possède deux machines à pôles à griffes (04) qui sont disposées dans le palier à roulement (01) en étant opposées dans le sens axial.

8. Machine à pôles à griffes (04) destinée à être installée dans un palier de roulement (01), comprenant une séquence de pôles magnétiques (05) qui sont disposés de manière circulaire sur une première bague porteuse (07), deux tôles à griffes (08, 09) opposées dans le sens axial munies de surfaces latérales (10) qui s'étendent dans le sens radial et de griffes (12, 13) coudées dans le sens axial, les griffes (12, 13) des tôles à griffes (08, 09) étant disposées imbriquées les unes dans les autres par leur denture, et une bobine (15) qui est entourée par les tôles à griffes (08, 09), les tôles à griffes (08, 09) étant réalisées sous la forme d'une portion en arc de cercle, **caractérisée en ce que** les surfaces latérales (10) des tôles à griffes (08, 09) possèdent des rainures radiales (14).
